# FASCICULE DE BREVET EUROPEEN

(11) **EP 4 430 708 B1**
(45) Date de publication et mention de la délivrance du brevet: **20.08.2025**
(21) Numéro de dépôt: 22801763.8
(22) Date de dépôt: 11.10.2022
(51) Int. Cl.: H01R 13/11, H01R 13/18, H01R 13/193, H01R 12/89

(54) **DISPOSITIF DE CONNEXION**
ANSCHLUSSVORRICHTUNG
CONNECTION DEVICE

(30) Priorité: 10.11.2021 FR 2111926
(43) Date de publication de la demande: 18.09.2024
(73) Titulaire: A. Raymond et Cie, 38000 Grenoble (FR)
(72) Inventeur: BRICHET-BILLET, Etienne, 38000 GRENOBLE (FR)
(74) Mandataire: IP Trust
(86) Numéro de dépôt international: PCT/EP2022/078240
(87) Numéro de publication internationale: WO 2023/083544

(56) Documents cités:
- EP-A1- 3 358 647
- WO-A1-2008/117405
- FR-A- 1 388 814

## Description

### DOMAINE DE L'INVENTION

La présente invention se rapporte au domaine des batteries modulaires et plus particulièrement à celui de la connectique. Notamment, la présente invention concerne un dispositif de connexion inter batterie.

### ARRIERE PLAN TECHNOLOGIQUE DE L'INVENTION

Un dispositif de connexion inter batterie connu de l'état de la technique est décrit dans le document EP3358647.

Notamment, et tel qu'illustré à la [Fig.12] du document EP3358647, ce dispositif comprend un clip de connexion en forme de U définissant un canal en U dans lequel une languette de connexion d'une batterie peut être insérée et maintenue par effet ressort du clip de connexion.

Le dispositif de connexion comprend également un élément mobile susceptible d'adopter l'une ou l'autre d'une position désengagée et d'une position engagée, et qui est pourvu d'au moins une cale engagée dans le canal en U.

La cale est notamment agencée de sorte que le clip de connexion présente un écartement dépendant de la position de l'élément mobile. A cet égard, la position désengagée et la position engagée sont des positions de l'élément mobile pour lesquelles la cale impose aux ailes du clip de connexion, respectivement, un premier écartement et un deuxième écartement inférieur au premier écartement.

Ainsi, lorsqu'il s'agit de connecter le dispositif de connexion à une languette de connexion d'une batterie, l'élément mobile est dans un premier temps dans sa position désengagée afin de ménager un écartement suffisant (le premier écartement) des ailes du clip de connexion et ainsi permettre l'insertion de la languette de connexion dans le canal en U. Cette insertion est alors suivie d'un mouvement de l'élément mobile de sa position désengagée vers sa position engagée de sorte que les ailes du clip de connexion se resserrent contre la languette et maintiennent cette dernière par effet ressort.

Bien que facile d'emploi, ce dispositif n'est toutefois pas satisfaisant.

En effet, le clip de connexion proposé dans le document EP3358647 se voit imposer, lorsque l'élément mobile passe de l'une de la position engagée et de la position désengagée vers l'autre de ces deux positions, des déformations susceptibles d'affecter sa tenue mécanique.

Par ailleurs, l'effet de maintien de la languette de connexion dans le canal en U (et donc l'efficacité de la connexion électrique) n'est assuré que par le seul effet ressort du clip de connexion.

Ainsi, un but de la présente invention est de proposer un dispositif de connexion pour lequel les déformations subies par le clip de connexion restent limitées à inférieures à celles observées dans le document EP3358647.

Un autre but de la présente invention est de proposer un dispositif de connexion pour lequel le serrage de la languette de connexion n'est pas supporté exclusivement par le clip de connexion.

### BREVE DESCRIPTION DE L'INVENTION

La présente invention concerne un dispositif de connexion qui comprend :
- un boîtier pourvu d'un corps principal parallélépipédique, formant un logement principal accessible par une ouverture d'insertion formée sur une face inférieure du boîtier ;
- un élément de connexion, disposé dans le logement principal, qui comprend deux ailes de connexion reliées entre elles par une base de connexion ;
- un clip de serrage, disposé dans le logement principal, qui comprend deux ailes de serrage reliées entre elles par une base de serrage, et disposées de part et d'autre de l'élément de connexion de manière à appliquer une force par effet ressort sur chacune des ailes de connexion tendant à les resserrer l'une contre l'autre dès lors que le clip de serrage se trouve dans un état libre ;
- un élément mobile, disposé dans le logement principal, qui comprend deux ailes latérales reliées par une base, dite base mobile, les ailes latérales étant disposées de part et d'autre du clip de serrage, l'élément mobile étant susceptible d'adopter une position haute ou une position basse, la position basse étant une position pour laquelle l'élément mobile laisse le clip de serrage dans son état libre, tandis que la position haute est une position pour laquelle les ailes latérales présentent un écartement, dit premier écartement, supérieur à l'écartement, dit deuxième écartement, observé dans la position basse, et exercent sur chacune des ailes de serrage une force s'opposant à l'effet ressort qui conduit à l'écartement desdites ailes de serrage.

Selon un mode de réalisation, chaque aile de serrage comprend une série de languettes d'appui longitudinales parallèles entres elles et terminant ladite aile de serrage par un bord, dit bord d'appui, opposé à la base de serrage, les languettes d'appui d'une aile de serrage donnée étant partiellement insérées par leur extrémité libre dans des logements, dits logements d'appui, des ailes latérales de sorte que lorsqu'elles s'écartent l'une de l'autre, les ailes latérales entrainent les ailes de serrage dans leur mouvement afin de les écarter également.

Selon un mode de réalisation, l'élément mobile est agencé de sorte que son mouvement de la position haute vers la position basse correspond à une translation dudit élément mobile d'une face supérieure du boîtier vers sa face inférieure, la face supérieure étant parallèle et opposée à la face inférieure.

Selon un mode de réalisation, le logement principal du boîtier comprend sur l'une au moins d'une face interne avant et d'une face interne arrière une cale, la face interne arrière et la face interne avant étant parallèles entre elles, la cale étant adaptée pour imposer aux ailes latérales le premier écartement lorsque l'élément mobile est dans la position haute et le deuxième écartement lorsque l'élément mobile est dans la position basse.

Selon un mode de réalisation, les ailes latérales sont perpendiculaires à la face interne avant et à la face interne arrière, chaque aile latérale comprenant deux bords latéraux parallèles entre eux qui s'étendent à partir de la base de l'élément mobile, au moins un des deux bords latéraux comprend une butée coopérant avec la cale pour imposer l'un ou l'autre du premier et du deuxième écartement aux ailes latérales lorsque l'élément mobile se trouve dans, respectivement, sa position haute et sa position basse.

Selon un mode de réalisation, ledit dispositif comprend un levier disposé dans le boîtier et susceptible d'adopter l'une ou l'autre d'une position déployée et d'une position pliée par pivotement autour de l'axe pivot, la position déployée étant une position pour laquelle le levier impose à l'élément mobile sa position haute, et la position pliée étant une position pour laquelle le levier impose à l'élément mobile sa position basse.

Selon un mode de réalisation, le levier comprend deux bras de levier parallèles entre eux, et solidaires l'un de l'autre, chaque bras de levier comprenant un arbre traversant une glissière formée dans une paroi du boîtier, perpendiculaire à l'axe pivot A, l'arbre et la glissière sont agencés pour que ledit arbre soit guidé dans la glissière lors du pivotement du levier autour de l'axe pivot, et l'arbre coopère avec une rainure formée dans la base mobile afin d'imposer l'une ou l'autre de la position haute et de la position basse à l'élément mobile lors du pivotement du levier.

Selon un mode de réalisation, le levier comprend deux éléments longitudinaux qui s'étendent dans une direction opposée aux bras de levier et destinés à coopérer avec des butés d'une batterie lorsque le dispositif est connecté à une languette de connexion de ladite batterie, ladite coopération étant prévue pour prévenir la déconnexion dudit dispositif lorsque le levier est en position pliée.

Selon un mode de réalisation, le boîtier comprend un clip de verrouillage configuré pour verrouiller le levier lorsqu'il se trouve en position pliée.

Selon un mode de réalisation, le corps principal comprend deux parois, dites parois latérales, disposées de part et d'autre des ailes latérales, et dans chacune desquelles est découpée une patte flexible terminée par une extrémité libre en affleurement avec la face inférieure, chaque patte flexible comprend une butée, dite butée de blocage, se projetant intérieurement dans le logement principal, chaque patte flexible coopérant avec l'aile latérale qui lui est directement adjacente de manière à pouvoir imposer au dispositif l'un ou l'autre d'un premier état, et d'un deuxième état, le premier état étant un état pour lequel chaque aile latérale est en butée contre un plan de butée de la butée de blocage de la patte flexible avec laquelle elle coopère de manière à empêcher l'élément mobile d'adopter sa position basse, tandis que le deuxième état est un état pour lequel les pattes flexibles sont fléchies de sorte que chacune des butées de blocage soit dans une position dite de retrait et autorisent ainsi l'élément mobile à adopter sa position basse.

Selon un mode de réalisation, chaque aile latérale comprend une contre butée coopérant avec la butée de blocage.

Selon un mode de réalisation, la butée de blocage de chaque patte flexible comprend en direction de son extrémité libre et dans l'ordre, le plan de butée et un plan d'écartement, le plan d'écartement étant agencé de sorte que le glissement d'une languette d'engagement contre ledit plan d'écartement selon une direction perpendiculaire à la face inférieure et dans le plan de la paroi latérale provoque le fléchissement de la patte flexible et la mise en position de retrait de la butée de blocage.

Selon un mode de réalisation, la patte latérale comprend une section latéralement décalée qui s'étend à partir de l'extrémité libre de ladite patte latérale et qui est reliée à une section principale de ladite patte par une section intermédiaire portant pour partie le plan d'écartement, la section principale et la section latéralement décalée étant parallèles entre elles.

Selon un mode de réalisation, la patte flexible comprend une section généralement plane qui s'étend uniformément de sa naissance jusqu'à son extrémité libre, la butée de blocage de ladite patte flexible comprend un plan incliné opposé au plan d'écartement par rapport au plan de butée, le plan incliné étant configuré de sorte que le glissement de la contre butée contre ledit plan incliné, lorsqu'un effort est exercé sur l'élément mobile en direction de la face inférieure, impose un fléchissement intermédiaire aux pattes flexibles permettant de mettre la contre butée en butée contre le plan de blocage.

### Brève description des dessins

D'autres caractéristiques et avantages de l'invention ressortiront de la description détaillée d'un dispositif de connexion d'un terminal d'un module de batterie qui va suivre en référence aux figures annexées sur lesquelles :
[Fig.1] La [Fig.1] est une représentation partielle et en perspective d'un dispositif de connexion selon un premier mode de réalisation de la présente invention, sur cette [Fig.1], le dispositif est représenté avec un levier dans une position déployée de manière à imposer à un élément mobile (non visible sur cette figure) sa position haute ;
[Fig.2] La [Fig.2] est une représentation en perspective du boîtier isolé du dispositif de connexion représenté à la [Fig.1] ;
[Fig.3] La [Fig.3] est une représentation en perspective d'un élément de connexion isolé du dispositif de connexion représenté à la [Fig.1] ;
[Fig.4] La [Fig.4] est une représentation en perspective d'un clip de serrage isolé du dispositif de connexion représenté à la [Fig.1] ;
[Fig.5] La [Fig.5] est une représentation en perspective d'un élément mobile isolé du dispositif de connexion représenté à la [Fig.1] ;
[Fig.6] La [Fig.6] représente le dispositif de connexion de la [Fig.1] selon un plan de coupe perpendiculaire aux parois latérales et parallèle à la paroi avant ;
[Fig.7] La [Fig.7] est une représentation schématique du dispositif de connexion de la [Fig.1], et selon un plan de coupe perpendiculaire aux parois latérales et parallèle à la paroi avant, le dispositif de connexion est notamment représenté dans une phase, dite de pré connexion, dans cette phase, le terminal d'un module de batterie est inséré entre les deux ailes de connexion, et l'élément mobile est en position haute ;
[Fig.8] La [Fig.8] est une représentation schématique du dispositif de connexion de la [Fig.1], et selon un plan de coupe perpendiculaire aux parois latérales et parallèle à la paroi avant, le dispositif de connexion est notamment représenté dans une phase, dite de connexion, dans cette phase, le terminal d'un module de batterie est inséré entre les deux ailes de connexion, et l'élément mobile est en position basse ;
[Fig.9] La [Fig.9] est une représentation schématique selon une vue en perspective de l'élément mobile dans lequel est inséré le clip de serrage ;
[Fig.10] La [Fig.10] est une représentation schématique selon un plan de coupe perpendiculaire aux parois latérales et parallèle à la paroi avant, le [Fig.10] illustre notamment la coopération entre la cale et des butées, en particulier, sur cette figure, la cale et les butées imposent aux ailes latérales un écartement égal au premier écartement ;
[Fig.11] La [Fig.11] est une représentation schématique selon un plan de coupe perpendiculaire aux paroi latérales et parallèle à la paroi avant, le [Fig.11] illustre notamment la coopération entre la cale et des butées, en particulier, sur cette figure, la cale est à distance des butées de sorte que les ailes latérales présentent un écartement égal au deuxième écartement ;
[Fig.12] La [Fig.12] est une représentation du dispositif de connexion de la [Fig.1] et selon une vue en perspective, sur cette figure le dispositif est pourvu d'un levier en position pliée ;
[Fig.13] La [Fig.13] est une représentation du dispositif de connexion de la [Fig.1] et selon une vue en perspective, sur cette figure le dispositif est pourvu d'un levier en position déployée ;
[Fig.14] La [Fig.14] est une représentation schématique du levier isolé du dispositif représenté à la [Fig.12] et à la [Fig.13] ;
[Fig.15] La [Fig.15] est une représentation schématique du dispositif de connexion selon le premier mode de réalisation et pourvu du levier, le levier est notamment représenté en transparence de manière à visualiser la coopération entre la glissière et l'arbre ;
[Fig.16] La [Fig.16] est une représentation schématique du dispositif de connexion de la [Fig.1], et selon un plan de coupe perpendiculaire aux parois latérales et parallèle à la paroi avant, le dispositif de connexion est notamment représenté dans une phase, dite de pré-engagement, dans cette phase, le terminal d'un module de batterie est inséré entre les deux ailes de connexion, et l'élément mobile est en position haute ;
[Fig.17] La [Fig.17] est une représentation schématique du dispositif de connexion de la [Fig.1], et selon un plan de coupe perpendiculaire aux parois latérales et parallèle à la paroi avant, le dispositif de connexion est notamment représenté dans une phase d'engagement, dans cette phase, le terminal d'un module de batterie est inséré entre les deux ailes de connexion ;
[Fig.18] La [Fig.18] est une représentation schématique du dispositif de connexion de la [Fig.1], et selon un plan de coupe perpendiculaire aux parois latérales et parallèle à la paroi avant, le dispositif de connexion est notamment représenté dans l'état de connexion conformément à la [Fig.8] ;
[Fig.19] La [Fig.19] est une représentation partielle et en perspective d'un dispositif de connexion selon un deuxième mode de réalisation de la présente invention ;
[Fig.20] La [Fig.20] est une représentation schématique du dispositif de connexion de la [Fig.19], et selon un plan de coupe perpendiculaire aux parois latérales et parallèle à la paroi avant, le dispositif de connexion est notamment représenté dans une phase, dite de pré-engagement, dans cette phase, l'élément mobile est en position haute ;
[Fig.21] La [Fig.21] est une représentation schématique du dispositif de connexion de la [Fig.19], et selon un plan de coupe perpendiculaire aux parois latérales et parallèle à la paroi avant, le dispositif de connexion est notamment représenté avec des ailes flexibles en flexion partielle ;
[Fig.22] La [Fig.22] est une représentation schématique du dispositif de connexion de la [Fig.19], et selon un plan de coupe perpendiculaire aux parois latérales et parallèle à la paroi avant, le dispositif de connexion est notamment représenté dans une phase d'engagement, dans cette phase, le terminal d'un module de batterie est inséré entre les deux ailes de connexion.
[Fig.23] La [Fig.23] est une représentation du dispositif de connexion de la [Fig.19] en phase de connexion.

### DESCRIPTION DETAILLEE DE L'INVENTION

La présente invention concerne un dispositif de connexion, et notamment un dispositif de connexion, destiné à être mis en œuvre pour établir des connexions électriques entre des éléments de batterie.

Notamment, le dispositif de connexion selon la présente invention comprend un boîtier pourvu d'une section de forme généralement parallélépipédique, formant un logement principal accessible par une ouverture formée sur une face inférieure du boîtier.

Un élément de connexion est disposé dans le logement principal. Cet élément de connexion comprend deux ailes de connexion reliées entre elles par une base de connexion et qui s'étendent de ladite base de connexion vers l'ouverture du boîtier.

Un clip de serrage est également disposé dans le logement principal. Ce clip de serrage comprend deux ailes de serrage reliées entre elles par une base de serrage et qui s'étendent de ladite base de serrage vers l'ouverture. Les deux ailes de serrage sont notamment disposées de part et d'autre de l'élément de connexion et appliquent une force par effet ressort sur chacune des ailes de connexion tendant à les resserrer l'une contre l'autre dès lors que le clip de serrage se trouve dans un état libre.

Enfin, un élément mobile est disposé dans le logement principal. Cet élément mobile comprend deux ailes latérales reliées par une base, dite base mobile, et qui s'étendent à partir de la base mobile vers l'ouverture. Les ailes latérales sont disposées de part et d'autre du clip de serrage. L'élément mobile est par ailleurs susceptible d'adopter une position haute ou une position basse. La position basse est, à cet égard, une position pour laquelle l'élément mobile laisse le clip de serrage dans son état libre, tandis que la position haute est une position pour laquelle les ailes latérales présentent un écartement, dit premier écartement, supérieur à l'écartement, dit deuxième écartement, observé dans la position basse, et exercent sur chacune des ailes de serrage une force s'opposant à l'effet ressort qui conduit à l'écartement desdites ailes de serrage.

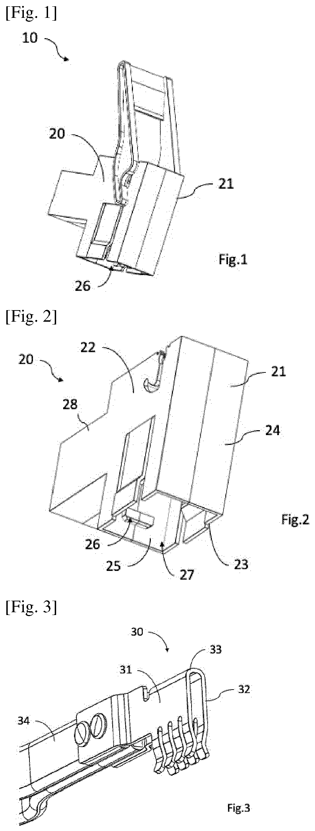

A la [Fig.1], on peut voir un exemple de dispositif de connexion 10 d'un terminal d'un module de batterie selon un premier mode de réalisation de la présente invention.

Le dispositif de connexion 10 comprend à cet égard un boîtier 20 fait d'un matériau électriquement isolant.

Le boîtier 20, également représenté isolé à la [Fig.2], comprend un corps principal 21 de forme généralement parallélépipédique.

Notamment, le corps principal 21 comprend deux parois latérales 22, 23, parallèles entre elles, ainsi qu'une paroi avant 24 et une paroi arrière 25 reliant entre elles les deux parois latérales 22 et 23.

Le corps principal 21 délimite par ailleurs un logement principal 26 accessible par une ouverture, dite ouverture d'insertion 27, formée sur une face inférieure du boîtier 20. Il est entendu que la face inférieure du boîtier 20 est perpendiculaire à chacune des parois latérales, avant et arrière.

Le boîtier 20 peut également comprendre une extension 28 également de forme parallélépipédique. L'extension 28 est notamment contiguë à la paroi arrière 25 du corps principal 21. L'extension 24 forme, à cet égard, un passage ouvert entre deux faces opposées de ladite extension 24 et communiquant avec le logement principal 26, via une ouverture ménagée dans la paroi arrière 25 du corps principal 21.

Le dispositif de connexion 10 de la [Fig.1] comprend également un élément de connexion 30 disposé dans le logement principal 26.

L'élément de connexion 30, représenté de manière isolée à la [Fig.3], comprend deux ailes, dites ailes de connexion 31 et 32, reliées entre elles par une base, dite base de connexion 33. Plus particulièrement, l'élément de connexion 30 est disposé dans le logement principal 26 de sorte que les ailes de connexion 31 et 32 s'étendent de la base de connexion vers l'ouverture d'insertion 27. Il est entendu, sans qu'il soit nécessaire de le préciser que l'élément de connexion 30 est maintenu fixe dans le logement principal 26 (en liaison fixe). Notamment, le maintien en liaison fixe de l'élément de connexion 30 dans le logement principal 26 peut faire intervenir une barre omnibus 34 (« Bus bar », selon la terminologie Anglo-Saxonne), traversant le passage ouvert. En particulier, la barre omnibus peut traverser, au moins partiellement, l'extension 28, afin de venir au contact de l'élément de connexion. Un serrage contre les parois de l'extension 28 de l'élément de connexion 30 et/ou de la barre omnibus permet de maintenir fixe dans le logement principal 26 ledit élément de connexion 30.

L'élément de connexion 30 peut comprendre un matériau électriquement conducteur et notamment du cuivre, un alliage de cuivre, de l'aluminium, ou encore un alliage d'aluminium.

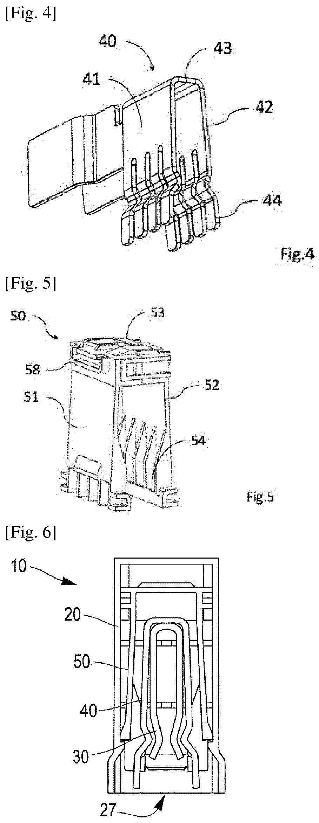

Le dispositif de connexion 10 comprend également un clip de serrage 40 disposé dans le logement principal 26 ([Fig.4]). Le clip de serrage 40 comprend deux ailes, dites ailes de serrage 41, 42, reliées entre elles par une base, dite base de serrage 43 et qui s'étendent de ladite base de serrage 43 vers l'ouverture d'insertion 27. Les deux ailes de serrage 41 et 42 sont notamment disposées de part et d'autre de l'élément de connexion 30 et sont destinées à appliquer une force par effet ressort sur chacune des ailes de connexion 31, 32 tendant à les resserrer l'une contre l'autre dès lors que le clip de serrage 40 se trouve dans un état dit état libre.

Il est entendu que l'élément de connexion 30 et le clip de serrage 40 présentent chacun une section en U, et sont agencés de manière « concentrique » (de sorte que le clip de serrage vienne loger, entre ses ailes de serrage, l'élément de connexion 30). La base de serrage 43 et la base de connexion 33 peuvent, à cet égard, être au contact l'une de l'autre.

Il est également entendu que le clip de serrage est maintenu fixe dans le logement principal 26. A cet égard, le clip de serrage 40 peut être fixé à l'élément de connexion 30.

Le dispositif de connexion 10 comprend un élément mobile 50 également disposé dans le logement principal 26 ([Fig.5]). L'élément mobile 50 comprend deux ailes, dites ailes latérales 51, 52 reliées par une base, dite base mobile 53. Chaque aile latérale s'étend à partir de la base mobile, entre deux bords dits bords latéraux, vers l'ouverture d'insertion 27. Les ailes latérales 51, 52 sont par ailleurs disposées de part et d'autre du clip de serrage 40.

Ainsi, et tel qu'illustré à la [Fig.6], l'élément de connexion 30, le clip de serrage 40, et l'élément mobile 50 sont agencés de manière concentrique dans le logement principal 26 du corps principal 21. Plus particulièrement, l'élément de connexion 30 est disposé entre les ailes de serrage 41, 42, tandis que le clip de serrage 40 est pour sa part placé entre les ailes latérales 51, 52.

En outre, l'élément mobile 50 est susceptible d'adopter l'une ou l'autre d'une position haute et d'une position basse. La position basse est une position pour laquelle l'élément mobile 50 laisse le clip de serrage 40 dans son état libre. En d'autres termes, la position basse est une position pour laquelle les ailes de serrage 41, 42 exercent un effort sur les ailes de connexion tendant à les resserrer l'une contre l'autre, et par voie de conséquence, réduire leur écartement.

La position haute est une position pour laquelle les ailes latérales présentent un écartement, dit premier écartement, supérieur à l'écartement, dit deuxième écartement, observé dans la position basse, et exercent sur chacune des ailes de serrage une force s'opposant à l'effet ressort qui conduit à l'écartement desdites ailes de serrage.

En d'autres termes, le passage de l'élément mobile 50 de la position haute vers la position basse permet de libérer la tension exercée par le clip de serrage de sorte que ce dernier applique une force tendant à resserrer les ailes de connexion. A contrario, le passage de l'élément mobile de la position basse vers la position haute, se traduit par un écartement des ailes latérales. Ces dernières entrainent dans leur mouvement les ailes de serrage qui n'exercent alors plus aucun effort de serrage sur les ailes de connexion.

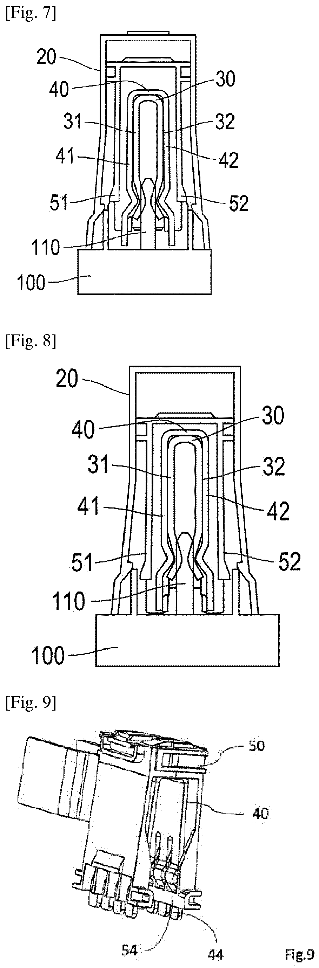

La mise en œuvre du dispositif de connexion 10 selon la présente invention pour la connexion d'un terminal 110 d'un module de batterie 100 est illustrée à la [Fig.7] et à la [Fig.8].

Notamment, la [Fig.7] est une représentation schématique du dispositif de connexion 10 dans une phase, dite de pré connexion. Dans cette phase, le terminal 110 est inséré entre les deux ailes de connexion 31, 32, et l'élément mobile 50, en position haute, maintient les ailes de serrage à distance des ailes de connexion. En d'autres termes, les ailes de serrage 41, 42 n'exercent aucun effort sur les ailes de connexion 31, 32.

La [Fig.8] est une représentation schématique du dispositif de connexion de la [Fig.7] dans une phase dite de connexion. Dans cette phase, le terminal 110 est inséré entre les deux ailes de connexion 31, 32, et l'élément mobile 50 est en position basse. En d'autres termes, les ailes latérales sont écartées selon leur deuxième écartement, et n'exercent plus d'effort sur les ailes de serrage s'opposant à l'effet ressort. Les ailes de serrage 41, 42 sont ainsi libres d'exercer un effort (par effet ressort) sur les ailes de connexion 31, 32 tendant à les resserrer l'une contre l'autre de sorte que ces dernières retiennent le terminal 110.

Il est entendu que le passage de l'élément mobile de l'une de la position haute ou de la position basse vers l'autre de ces ceux positions correspond à un déplacement dudit élément mobile dans le logement principal 26 selon une direction perpendiculaire à la face inférieure, dite direction de déplacement. Plus particulièrement, le passage de la position haute vers la position basse correspond à un déplacement de l'élément mobile selon la direction de déplacement et selon un sens allant d'une face supérieure du corps principal vers sa face inférieure, la face supérieure étant opposée à la face inférieure. De manière équivalente, le passage de la position basse vers la position haute correspond à un déplacement de l'élément mobile selon la direction de déplacement et selon un sens allant de la face inférieure vers la face supérieure.

De manière particulièrement avantageuse, chaque aile de serrage 41, 42 comprend une série de languettes d'appui 44 longitudinales parallèles entres elles et terminant ladite aile de serrage par un bord, dit bord d'appui, opposé à la base de serrage ([Fig.4] et [Fig.9]). Les languettes d'appui 44 d'une aile de serrage donnée sont partiellement insérées par leur extrémité libre dans des logements, dits logements d'appui 54 ([Fig.5] , et [Fig.9]), des ailes latérales. Ainsi, lorsqu'elles s'écartent l'une de l'autre, les ailes latérales entrainent les ailes de serrage dans leur mouvement afin de les écarter également.

Le niveau d'écartement des ailes latérales 51, 52 de l'élément mobile 50, qu'il se trouve en position haute ou en position basse, est imposé par une ou deux cales 29 (ci-après « les cales »). Notamment, les cales peuvent être disposées, respectivement, sur l'une et l'autre de la paroi avant et de la paroi arrière et se projettent intérieurement au logement principal 26. En d'autres termes, une face interne avant de la paroi avant comprend une cale, tandis qu'une face interne arrière de la paroi arrière comprend l'autre cale.

Plus particulièrement, le profil de chacune des cales est adapté pour imposer aux ailes latérales, le premier écartement lorsque l'élément mobile est dans la position haute, et le deuxième écartement lorsque l'élément mobile est dans la position basse.

A cet égard, chaque aile latérale peut comprendre sur ses bords latéraux une butée coopérant avec une des cales pour imposer l'un ou l'autre du premier et du deuxième écartement aux ailes latérales lorsque l'élément mobile se trouve dans, respectivement, sa position haute et sa position basse.

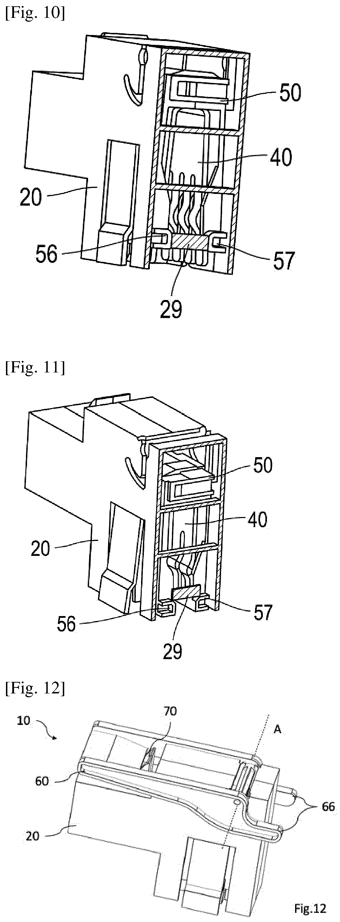

Par exemple, et tel qu'illustré à la [Fig.10] et à la [Fig.11], l'élément mobile 50 est représenté avec deux butées 56 et 57 en regard l'une de l'autre et disposées sur les deux bords latéraux directement adjacents de la face avant interne du corps principal.

La cale 29 est disposée sur la face avant interne de manière à coopérer avec les butées 56 et 57 afin d'imposer l'un ou l'autre du premier et du deuxième écartement lorsque l'élément mobile 50 est, respectivement, dans sa position haute et dans sa position basse. Plus particulièrement, dès lors que l'élément mobile 50 est dans sa position haute, la cale 29 s'interpose entre les butées 56 et 57 de manière à maintenir un écartement des deux ailes latérales égal au premier écartement.

De manière équivalente, dès lors que l'élément mobile 50 est dans sa position basse, la cale est en retrait des butées 56 et 57, permettant ainsi aux ailes latérales de se rapprocher l'une de l'autre jusqu'à présenter un écartement égal au deuxième écartement.

Par ailleurs, afin de faciliter le passage de l'une à l'autre de la position haute et de la position basse, la cale 29 et/ou les butées 56 et 57 peuvent présenter des coins arrondis ou biseautés.

Les aspects décrits ci-avant en relation avec la face interne avant et les bords latéraux (dit bords latéraux avant) qui lui sont directement adjacents sont également applicables à la face interne arrière et les bords latéraux, dits bords latéraux arrières, opposés aux bords latéraux avants.

Le dispositif de connexion 10 peut avantageusement comprendre un levier 60, monté sur le boîtier. Le levier 60 est susceptible d'adopter l'une ou l'autre d'une position déployée et d'une position pliée par pivotement autour d'un axe pivot A. Plus particulièrement, le levier 60 est configuré pour imposer l'une ou l'autre de la position haute et de la position basse à l'élément mobile.

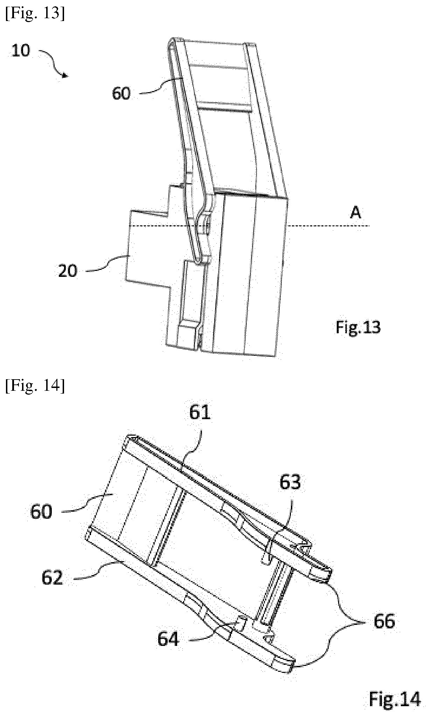

Notamment, la position déployée ([Fig.13]) est une position pour laquelle le levier 60 impose à l'élément mobile 50 sa position haute, tandis que la position pliée ([Fig.12]) est une position pour laquelle le levier 60 impose à l'élément mobile 50 sa position basse.

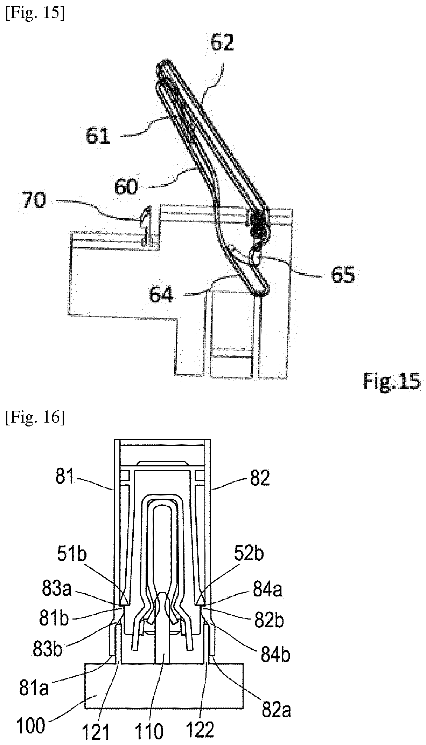

Le levier 60 peut comprendre deux bras de levier 61, 62 parallèles entre eux, et solidaires l'un de l'autre ([Fig.14]). Chaque bras de levier 61, 62 peut comprendre un arbre 63, 64 traversant une glissière 65 ([Fig.15]) formée dans une paroi latérale du corps principal (il est entendu que chaque arbre débouche dans le logement principal). L'arbre et la glissière sont agencés pour que, d'une part, ledit arbre soit guidé dans la glissière lors du pivotement du levier autour de l'axe pivot, et d'autre part l'arbre coopère avec une rainure 58 formée dans la base mobile 53 afin d'imposer l'une ou l'autre de la position haute et de la position basse à l'élément mobile lors du pivotement du levier.

Toujours de manière avantageuse, le levier comprend deux éléments longitudinaux 66 qui s'étendent dans une direction opposée aux bras de levier et destinés à coopérer avec des butées d'une batterie lorsque le dispositif est connecté à un terminal de connexion de ladite batterie, ladite coopération étant prévue pour prévenir la déconnexion dudit dispositif lorsque le levier est en position pliée.

Le boîtier peut également être pourvu d'un clip de verrouillage 70 configuré pour verrouiller le levier lorsqu'il se trouve en position pliée ([Fig.12]).

Le dispositif de connexion selon ce premier mode de réalisation peut également comprendre des moyens d'engagement destinés à bloquer le passage de l'élément mobile de sa position haute vers sa position basse tant que le terminal de connexion du module de batterie n'est pas correctement enfiché entre les ailes de connexion 31, 32.

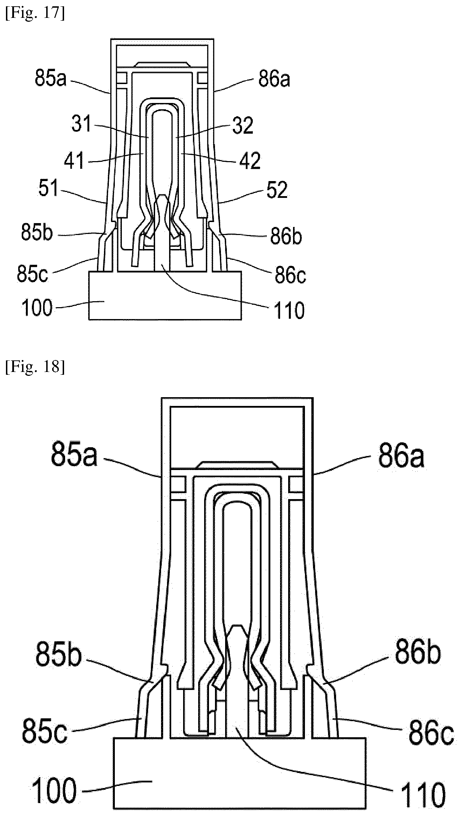

Notamment, et tel qu'illustré à la [Fig.16], à la [Fig.17], et à la [Fig.18], les moyens d'engagement peuvent comprendre deux pattes flexibles 81, 82 découpées respectivement dans chacune des parois latérales 21, 22 du corps principal 20. Les pattes flexibles 81 et 82 sont ainsi disposées de part et d'autre des ailes latérales 51, 52. Les pattes flexibles 81, 82 s'étendent de leur naissance vers leur extrémité libre 81a, 82a selon la direction de déplacement et selon le sens allant de la face supérieure vers la face inférieure.

Plus particulièrement, l'extrémité libre 81a, 82a de chaque patte flexible 81, 82 est en affleurement avec la face inférieure.

Chaque patte flexible comprend également une butée, dite butée de blocage 81b, 82b, se projetant intérieurement dans le logement principal 26, et chaque patte flexible 81 et 82 coopère avec l'aile latérale 51, 52 qui lui est directement adjacente de manière à pouvoir imposer au dispositif l'un ou l'autre d'un premier état, et d'un deuxième état. Le premier état est un état pour lequel chaque aile latérale 51, 52 est en butée contre un plan de butée de la butée de blocage de la patte flexible 81 et 82 avec laquelle elle coopère de manière à empêcher l'élément mobile 50 d'adopter sa position basse. Le deuxième état est un état pour lequel les pattes flexibles 81 et 82 sont fléchies de manière à autoriser l'élément mobile à adopter sa position basse. En d'autres termes le deuxième état est un état pour lequel les ailes latérales 51, 52 ne sont plus en butée contre les butées de blocage 81b, 82b.

Le fléchissement des pattes flexibles 81 et 82 peut notamment être amorcé lors d'une poussée de l'élément de connexion 10 en direction du terminal à enficher. Plus particulièrement, les pattes flexibles 81, 82 peuvent être configurées pour fléchir lors de la poussée en coopérant avec des languettes, dite languettes d'engagement 121, 122, disposées à proximité du terminal 110, et chacune en alignement avec une patte flexible 81, 82.

Chaque aile latérale peut comprendre une contre butée 51b, 52b coopérant avec la butée de blocage.

Plus particulièrement, la butée de blocage de chaque patte flexible 81, 82 peut comprendre en direction de son extrémité libre 81a, 82a et dans l'ordre, le plan de butée 83a, 84a et un plan d'écartement 83b, 84b ([Fig.16]). Le plan d'écartement 83b, 84b est notamment agencé de sorte que le glissement d'une languette d'engagement 121, 122 contre ledit plan d'écartement 83b, 84b selon une direction perpendiculaire à la face inférieure et dans le plan de la paroi latérale provoque le fléchissement de la patte flexible et la mise en position de retrait de la butée de blocage 81b, 82b. Il est entendu, sans qu'il soit nécessaire de le préciser, que le plan d'écartement 83b, 84b forme un plan oblique par rapport à la direction d'élongation de la patte flexible 81, 82.

Selon ce premier mode de réalisation, le plan d'écartement 83b, 84b d'une patte flexible 81,82 est notamment porté par une section intermédiaire 85b, 86b de la patte flexible reliant une section principale 85a, 86a et une section terminale 85c, 86c de ladite patte flexible ([Fig.17]). Plus particulièrement, la section terminale 85c, 86c est latéralement déportée. Par latéralement déportée, on entend décalé latéralement par rapport à la direction d'élongation de la section principale.

Ainsi, la mise en œuvre du dispositif de connexion 10 selon ce premier mode de réalisation peut comprendre au moins deux phases dites respectivement phase de pré-engagement et phase d'engagement.

A cet égard, la [Fig.16] illustre la phase de pré-engagement. Lors de l'exécution de cette phase, le dispositif de connexion 10 est positionné par sa face inférieure en regard d'un terminal 110 d'un module de batterie 100, et de manière à insérer partiellement ledit terminal entre des ailes de connexion. A l'issue de cette phase, chacune des sections terminales 85c et 86c contacte latéralement une languette d'engagement 121, 122, et de sorte que chaque languette d'engagement soit en appui contre un plan d'écartement 83b, 84b.

La phase de pré-engagement est alors suivie de la phase d'engagement ([Fig.17]). Cette phase permet d'induire un fléchissement des pattes flexibles afin de mettre en position de retrait les butées de blocage 81b, 82b. Ce fléchissement intervient notamment dès lors qu'un effort de poussée est exercé sur le dispositif de connexion selon un sens allant de la face supérieure vers la face inférieure. Plus particulièrement, lors de l'exécution de l'effort de poussée, chaque languette d'engagement impose un fléchissement des pattes flexibles.

Le levier 60 peut ensuite être actionné afin de faire passer l'élément mobile de sa position haute vers sa position basse ([Fig.18]).

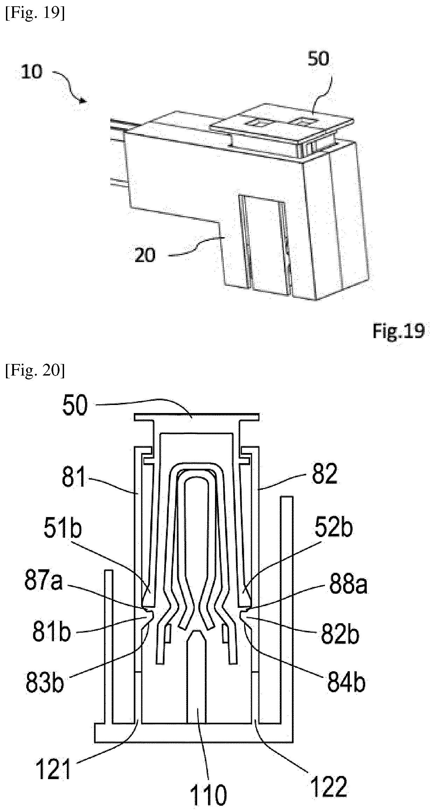

L'invention concerne également un deuxième mode de réalisation. Ce deuxième mode reprend pour l'essentiel les éléments du premier mode de réalisation. Ce deuxième mode de réalisation ne met toutefois pas nécessairement en œuvre un levier 60. Plus particulièrement, l'élément mobile 50 peut former un bouton poussoir accessible directement par la face supérieure ([Fig.19]). En d'autres termes, un simple effort de pression exercé sur l'élément mobile permet à ce dernier de passer de sa position haute vers sa position basse.

Par ailleurs, toujours selon ce deuxième mode de réalisation, les pattes flexibles 81, 82 s'étendent de manière uniforme de leur naissance jusqu'à leur extrémité libre 81a, 82a. En d'autres termes, les pattes flexibles 81, 82 ne comprennent pas de section terminale 85c, 86c latéralement déportée ([Fig.20]). Ainsi, en phase de pré-engagement, les languettes d'engagement 121, 122 se trouvent chacune dans le prolongement d'une patte flexible 81, 82 et empêchent ainsi tout mouvement du dispositif de connexion visant à établir la connexion avec le terminal 110.

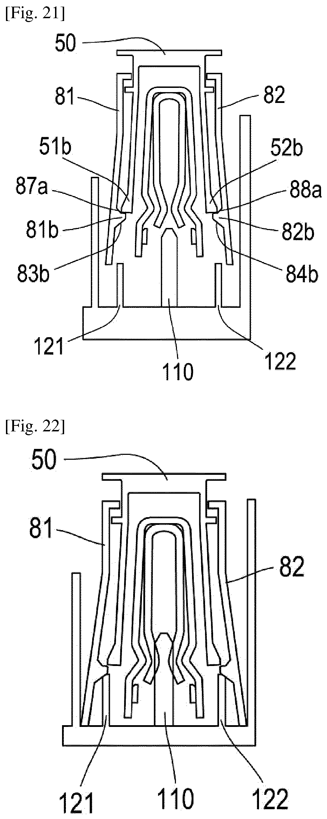

Par ailleurs, selon ce deuxième mode de réalisation, les butées de blocage comprennent chacune un plan incliné 87a, 88a opposé au plan d'écartement par rapport au plan de butée. Ces plans inclinés 87a, 88a sont agencés de sorte qu'un glissement des contres butées contre l'un et l'autre des plans de glissement 83b, 84b, selon la direction de déplacement et le sens allant de la face supérieure vers la face inférieure, induise une flexion partielle des pattes flexibles. En particulier, la flexion partielle permet d'écarter les pattes flexibles des languettes d'engagement ([Fig.21]). Un effort supplémentaire exercé sur le dispositif de connexion 10 permet alors d'amener chacun des plans d'écartement 83b, 84b au contact des languettes d'engagement 121, 122.

La suite de l'engagement, illustré à la [Fig.22], suit un mécanisme équivalent à celui décrit en relation avec le premier mode de réalisation.

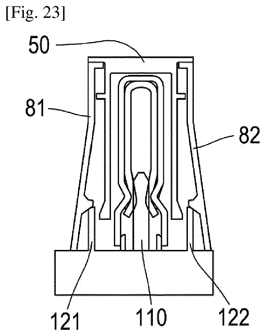

Une poussée finale (illustré à la [Fig.23]) permet de faire passer l'élément mobile 50 dans sa position basse.

Bien sûr, l'invention n'est pas limitée aux modes de réalisation décrits et on peut y apporter des variantes de réalisation sans sortir du cadre de l'invention tel que défini par les revendications.

## Revendications

1. Dispositif de connexion (10) qui comprend :
- un boîtier (20) pourvu d'un corps principal (21) parallélépipédique, formant un logement principal (26) accessible par une ouverture d'insertion (27) formée sur une face inférieure du boîtier (20) ;
- un élément de connexion (30), disposé dans le logement principal (26), qui comprend deux ailes de connexion (31, 32) reliées entre elles par une base de connexion (33) ;
- un clip de serrage (40), disposé dans le logement principal (26), qui comprend deux ailes de serrage (41, 42) reliées entre elles par une base de serrage (43), et disposées de part et d'autre de l'élément de connexion (30) de manière à appliquer une force par effet ressort sur chacune des ailes de connexion (31, 32) tendant à les resserrer l'une contre l'autre dès lors que le clip de serrage (40) se trouve dans un état libre ;
- un élément mobile (50), disposé dans le logement principal (26), qui comprend deux ailes latérales (51, 52) reliées par une base, dite base mobile (53), les ailes latérales (51, 52) étant disposées de part et d'autre du clip de serrage (40), l'élément mobile (50) étant susceptible d'adopter une position haute ou une position basse, la position basse étant une position pour laquelle l'élément mobile (50) laisse le clip de serrage (40) dans son état libre, **caractérisé en ce que** la position haute est une position pour laquelle les ailes latérales (51, 52) présentent un écartement, dit premier écartement, supérieur à l'écartement, dit deuxième écartement, observé dans la position basse, et exercent sur chacune des ailes de serrage (41, 42) une force s'opposant à l'effet ressort qui conduit à l'écartement desdites ailes de serrage (41, 42).

2. Dispositif selon la revendication 2, dans lequel chaque aile de serrage comprend une série de languettes d'appui (44) longitudinales parallèles entres elles et terminant ladite aile de serrage par un bord, dit bord d'appui, opposé à la base de serrage (43), les languettes d'appui (44) d'une aile de serrage donnée étant partiellement insérées par leur extrémité libre dans des logements, dits logements d'appui (54), des ailes latérales (51, 52) de sorte que lorsqu'elles s'écartent l'une de l'autre, les ailes latérales (51, 52) entrainent les ailes de serrage (41, 42) dans leur mouvement afin de les écarter également.

3. Dispositif selon la revendication 1 ou 2, dans lequel l'élément mobile (50) est agencé de sorte que son mouvement de la position haute vers la position basse correspond à une translation dudit élément mobile (50) d'une face supérieure du boîtier (20) vers sa face inférieure, la face supérieure étant parallèle et opposée à la face inférieure.

4. Dispositif selon la revendication 3, dans lequel le logement principal (26) du boîtier (20) comprend sur l'une au moins d'une face interne avant et d'une face interne arrière une cale (29), la face interne arrière et la face interne avant étant parallèles entre elles, la cale (29) étant adaptée pour imposer aux ailes latérales (51, 52) le premier écartement lorsque l'élément mobile (50) est dans la position haute et le deuxième écartement lorsque l'élément mobile (50) est dans la position basse.

5. Dispositif selon la revendication 4, dans lequel les ailes latérales (51, 52) sont perpendiculaires à la face interne avant et à la face interne arrière, chaque aile latérale comprenant deux bords latéraux parallèles entre eux qui s'étendent à partir de la base de l'élément mobile (50), au moins un des deux bords latéraux comprend une butée (56, 57) coopérant avec la cale (29) pour imposer l'un ou l'autre du premier et du deuxième écartement aux ailes latérales (51, 52) lorsque l'élément mobile (50) se trouve dans, respectivement, sa position haute et sa position basse.

6. Dispositif selon l'une des revendications 3 à 5, dans lequel ledit dispositif comprend un levier (60) disposé dans le boîtier (20) et susceptible d'adopter l'une ou l'autre d'une position déployée et d'une position pliée par pivotement autour de l'axe pivot, la position déployée étant une position pour laquelle le levier (60) impose à l'élément mobile (50) sa position haute, et la position pliée étant une position pour laquelle le levier (60) impose à l'élément mobile (50) sa position basse.

7. Dispositif selon la revendication 6, dans lequel le levier (60) comprend deux bras de levier (61, 62) parallèles entre eux, et solidaires l'un de l'autre, chaque bras de levier (61, 62) comprenant un arbre (63, 64) traversant une glissière (65) formée dans une paroi du boîtier (20), perpendiculaire à l'axe pivot A, l'arbre et la glissière sont agencés pour que ledit arbre soit guidé dans la glissière lors du pivotement du levier (60) autour de l'axe pivot, et l'arbre coopère avec une rainure (58) formée dans la base mobile (53) afin d'imposer l'une ou l'autre de la position haute et de la position basse à l'élément mobile (50) lors du pivotement du levier (60).

8. Dispositif selon l'une des revendications 6 ou 7, dans lequel le boîtier (20) comprend un clip de verrouillage (70) configuré pour verrouiller le levier (60) lorsqu'il se trouve en position pliée.

9. Dispositif selon l'une des revendications 1 à 8, dans lequel le corps principal (21) comprend deux parois, dites parois latérales (22, 23), disposées de part et d'autre des ailes latérales (51, 52), et dans chacune desquelles est découpée une patte flexible terminée par une extrémité libre en affleurement avec la face inférieure, chaque patte flexible comprend une butée, dite butée de blocage, se projetant intérieurement dans le logement principal (26), chaque patte flexible coopérant avec l'aile latérale qui lui est directement adjacente de manière à pouvoir imposer au dispositif l'un ou l'autre d'un premier état, et d'un deuxième état, le premier état étant un état pour lequel chaque aile latérale est en butée contre un plan de butée de la butée de blocage (81b, 82b) de la patte flexible (81, 82) avec laquelle elle coopère de manière à empêcher l'élément mobile (50) d'adopter sa position basse, tandis que le deuxième état est un état pour lequel les pattes flexibles (81, 82) sont fléchies de sorte que chacune des butées de blocage (81b, 82b) soit dans une position dite de retrait et autorisent ainsi l'élément mobile (50) à adopter sa position basse.

10. Dispositif selon la revendication 9, dans lequel chaque aile latérale comprend une contre butée (51b, 52b) coopérant avec la butée de blocage (81b, 82b).

11. Dispositif selon la revendication 10, dans lequel la butée de blocage (81b, 82b) de chaque patte flexible comprend en direction de son extrémité libre et dans l'ordre, le plan de butée et un plan d'écartement (83b, 84b), le plan d'écartement étant agencé de sorte que le glissement d'une languette d'engagement (121, 122) contre ledit plan d'écartement selon une direction perpendiculaire à la face inférieure et dans le plan de la paroi latérale provoque le fléchissement de la patte flexible et la mise en position de retrait de la butée de blocage.

12. Dispositif selon la revendication 11, dans lequel la patte flexible comprend une section latéralement décalée qui s'étend à partir de l'extrémité libre de ladite patte flexible et qui est reliée à une section principale de ladite patte par une section intermédiaire portant pour partie le plan d'écartement, avantageusement la section principale et la section latéralement décalée étant parallèles entre elles.

13. Dispositif selon la revendication 11, dans lequel la patte flexible comprend une section généralement plane qui s'étend uniformément de sa naissance jusqu'à son extrémité libre, la butée de blocage (81b) de ladite patte flexible comprend un plan incliné (87a) opposé au plan d'écartement (83b) par rapport au plan de butée (83a), le plan incliné étant configuré de sorte que le glissement de la contre butée (51b) contre ledit plan incliné, lorsqu'un effort est exercé sur l'élément mobile (50) en direction de la face inférieure, impose un fléchissement intermédiaire aux pattes flexibles permettant de mettre la contre butée (51b) en butée contre le plan de butée (83a).

## Patentansprüche

1. Anschlussvorrichtung (10), umfassend:
- ein Gehäuse (20) mit einem parallelepipedischen Hauptkörper (21), der ein Hauptgehäuse (26) bildet, das durch eine an einer Unterseite des Gehäuses (20) gebildete Einführöffnung (27) zugänglich ist;
- ein im Hauptgehäuse (26) angeordnetes Verbindungselement (30), das zwei Verbindungsflügel (31, 32) umfasst, die durch eine Verbindungsbasis (33) miteinander verbunden sind;
- einen im Hauptgehäuse (26) angeordneten Klemmclip (40), der zwei Klemmflügel (41, 42) umfasst, die durch eine Klemmbasis (43) miteinander verbunden sind und auf beiden Seiten des Verbindungselements (30) so angeordnet sind, dass auf jeden der Verbindungsflügel (31, 32) eine Federkraft ausgeübt wird, die dazu neigt, sie aneinander festzuziehen, sobald sich der Klemmclip (40) in einem freien Zustand befindet;
- ein im Hauptgehäuse (26) angeordnetes bewegliches Element (50), das zwei Seitenflügel (51, 52) umfasst, die durch eine Basis, die sogenannte bewegliche Basis (53), verbunden sind, wobei die Seitenflügel (51, 52) zu beiden Seiten des Klemmclips (40) angeordnet sind, wobei das bewegliche Element (50) eine hohe oder eine niedrige Position einnehmen kann, wobei die untere Position eine Position ist, für die das bewegliche Element (50) den Klemmclip (40) in seinem freien Zustand belässt, **dadurch gekennzeichnet, dass** die hohe Position eine Position ist, bei der die Seitenflügel (51, 52) einen Abstand aufweisen, der als erster Abstand bezeichnet wird, der größer ist als der in der unteren Position beobachtete Abstand, und auf jeden der Klemmflügel (41, 42) eine der Federwirkung entgegenwirkende Kraft ausübt, die zum Abstand der Klemmflügel (41, 42) führt.

2. Vorrichtung nach Anspruch 2, wobei jeder Klemmflügel eine Reihe von Stützlaschen (44) aufweist, die parallel zueinander verlaufen und den Klemmflügel mit einer Kante, der sogenannten Stützkante, gegenüber der Klemmbasis (43) abschließen, wobei die Stützlaschen (44) eines gegebenen Spannflügels durch ihr freies Ende teilweise in die sogenannten Stützgehäuse (54) der Seitenflügel (51, 52) eingeführt sind, so dass die Seitenflügel (51, 52), wenn sie voneinander abweichen, die Klemmflügel (41, 42) in ihrer Bewegung antreiben, um sie auch auseinander zu bewegen.

3. Vorrichtung nach Anspruch 1 oder 2, wobei das bewegliche Element (50) angeordnet ist, dass seine Bewegung von der oberen in die untere Position einer Verschiebung des beweglichen Elements (50) von einer Oberseite des Gehäuses (20) zu seiner Unterseite entspricht, wobei die Oberseite parallel und gegenüber der Unterseite ist.

4. Vorrichtung nach Anspruch 3, wobei das Hauptgehäuse (26) des Gehäuses (20) an mindestens einer vorderen und einer hinteren Innenseite einen Keil (29) aufweist, wobei die hintere und die vordere Innenseite parallel zueinander sind, wobei der Keil (29) dazu geeignet ist, den Seitenflügeln (51, 52) den ersten Abstand aufzuzwingen, wenn sich das bewegliche Element (50) in der oberen Position befindet, und den zweiten Abstand, wenn sich das bewegliche Element (50) in der unteren Position befindet.

5. Vorrichtung nach Anspruch 4, wobei die Seitenflügel (51, 52) senkrecht zur vorderen Innenfläche und zur hinteren Innenfläche sind, wobei jeder Seitenflügel zwei parallel zueinander verlaufende Seitenkanten aufweist, die sich von der Basis des beweglichen Elements (50) aus erstrecken, mindestens eine der beiden Seitenkanten einen Anschlag (56, 57) aufweist, der mit dem Keil (29) zusammenarbeitet, um den Seitenflügeln (51, 52) einen der ersten und zweiten Abstände aufzuzwingen, wenn sich das bewegliche Element (50) in seiner oberen bzw. unteren Position befindet.

6. Vorrichtung nach einem der Ansprüche 3 bis 5, wobei die Vorrichtung einen Hebel (60) aufweist, der in dem Gehäuse (20) angeordnet ist und geeignet ist, entweder eine ausgefahrene Position und eine schwenkgeklappte Position um die Drehachse einzunehmen, die ausgefahrene Position eine Position ist, für die der Hebel (60) dem beweglichen Element (50) seine obere Position aufzwingt, und die gefaltete Position eine Position ist, für die der Hebel (60) dem beweglichen Element (50) seine untere Position aufzwingt.

7. Vorrichtung nach Anspruch 6, wobei der Hebel (60) zwei untereinander parallele und miteinander ineinandergreifende Hebelarme (61, 62) aufweist, wobei jeder Hebelarm (61, 62) eine Welle (63, 64) aufweist, die durch einen in einer Wand des Gehäuses (20) gebildeten Schlitten (65) senkrecht zur Drehachse A verläuft, wobei die Welle und der Schlitten so angeordnet sind, dass die Welle in den Schlitten beim Schwenken des Hebels (60) um die Drehachse geführt wird, und die Welle mit einer in der beweglichen Basis (53) gebildeten Nut (58) zusammenwirkt, um dem beweglichen Element (50) beim Schwenken des Hebels (60) eine der oberen und unteren Positionen aufzuzwingen.

8. Vorrichtung nach einem der Ansprüche 6 oder 7, wobei das Gehäuse (20) einen Verriegelungsclip (70) aufweist, der konfiguriert ist, um den Hebel (60) in der gebogenen Position zu verriegeln.

9. Vorrichtung nach einem der Ansprüche 1 bis 8, wobei der Hauptkörper (21) zwei Wände, sogenannte Seitenwände (22, 23), aufweist, die zu beiden Seiten der Seitenflügel (51, 52) angeordnet sind und aus denen jeweils eine flexible Lasche ausgeschnitten ist, die mit einem freien Ende bündig mit der Unterseite abgeschlossen ist, jede flexible Lasche einen Anschlag, genannt Blockieranschlag, aufweist, der in das Hauptgehäuse (26) hineinragt, wobei jede flexible Lasche mit dem unmittelbar angrenzenden Seitenflügel zusammenarbeitet, um der Vorrichtung den einen oder anderen eines ersten Zustands und eines zweiten Zustands aufzuzwingen, wobei der erste Zustand ein Zustand ist, bei dem jeder Seitenflügel gegen eine Anschlagebene des Blockieranschlags (81b, 82b) der flexiblen Lasche (81, 82) im Anschlag steht, mit der sie zusammenwirkt, um das bewegliche Element (50) daran zu hindern, seine untere Position einzunehmen, während der zweite Zustand ein Zustand ist, bei dem die flexiblen Laschen (81, 82) so gebogen sind, dass sich jeder der Blockieranschläge (81b, 82b) in einer sogenannten zurückgezogenen Position befindet, und es dadurch dem beweglichen Element (50) erlauben, seine untere Position einzunehmen.

10. Vorrichtung nach Anspruch 9, wobei jeder Seitenflügel einen Gegenanschlag (51b, 52b) aufweist, der mit dem Blockieranschlag (81b, 82b) zusammenarbeitet.

11. Vorrichtung nach Anspruch 10, wobei der Blockieranschlag (81b, 82b) jeder flexiblen Lasche in Richtung ihres freien Endes und in der Reihenfolge die Anschlagebene und eine Abstandsebene (83b, 84b) umfasst die Abstandsebene angeordnet ist, dass das Gleiten einer Eingriffszunge (121, 122) gegen die Abstandsebene in einer Richtung senkrecht zur Unterseite und in der Seitenwandebene das Biegen der flexiblen Lasche und das in die zurückgezogenen Position Bringen des Blockieranschlags bewirkt.

12. Vorrichtung nach Anspruch 11, wobei die flexible Lasche einen seitlich versetzten Abschnitt umfasst, der sich vom freien Ende der flexiblen Lasche erstreckt und der mit einem Hauptabschnitt der Lasche durch einen Zwischenabschnitt verbunden ist, der teilweise die Spreizebene trägt, wobei vorteilhafterweise der Hauptabschnitt und der seitlich versetzte Abschnitt parallel zueinander sind.

13. Vorrichtung nach Anspruch 11, wobei die flexible Lasche einen im allgemeinen ebenen Abschnitt umfasst, der sich gleichmäßig von seinem Stutzen bis zu seinem freien Ende erstreckt, wobei der Blockieranschlag (81b) der flexiblen Lasche eine geneigte Ebene (87a) gegenüber der Abstandsebene (83b) gegenüber der Anschlagebene (83a) umfasst, die geneigte Ebene konfiguriert ist, dass das Gleiten des Gegenanschlags (51b) gegen die geneigte Ebene, wenn eine Kraft auf das bewegliche Element (50) in Richtung der Unterseite ausgeübt wird, eine Zwischenbeugung der flexiblen Laschen erzwingt, die es ermöglicht, den Gegenanschlag (51b) gegen die Anschlagebene (83a) in Anschlag zu bringen.

## Claims

1. Connection device (10) which comprises:
- a housing (20) provided with a main parallelepiped-shaped body (21), forming a main housing (26) that can be accessed through an insertion opening (27) located on the bottom side of the housing (20);
- a connection element (30), disposed in the main housing (26), comprising two connection wings (31, 32) connected to each other by a connection base (33);
- a clamping clip (40), arranged within the main housing (26), comprising two clamping wings (41, 42) connected by a clamping base (43), and disposed on either side of the connection element (30) in such a way that, when the clamping clip (40) is in a free state, it exerts a spring-effect force on each of the connection wings (31, 32), pressing them toward each other;
- a movable element (50), disposed in the main housing (26), comprising two lateral wings (51, 52) connected by a base, referred to as the movable base (53), the lateral wings (51, 52) being disposed on either side of the clamping clip (40),
the movable element (50) being capable of adopting a high position or a low position, the low position being a position for which the movable element (50) leaves the clamping clip (40) in its free state, **characterised in that** the high position is a position in which the side wings (51, 52) have a separation, referred to as the first separation, that is greater than the separation, referred to as the second separation, observed in the low position, and exert on each of the clamping wings (41, 42) a force that opposes the spring effect responsible for separating said clamping wings (41, 42).

2. Device according to claim 2, wherein each clamping wing comprises a series of longitudinal support tongues (44) parallel to each other and terminating said clamping wing in an edge, referred to as the support edge, opposite to the clamping base (43), the support tongues (44) of a given clamping wing being partially inserted, by their free end, into recesses referred to as support recesses (54) of the lateral wings (51, 52), so that when the lateral wings (51, 52) are spaced apart from one another, they drive the clamping wings (41, 42) in their movement, thereby also spacing them apart.

3. Device according to claim 1 or 2, wherein the movable element (50) is arranged so that its movement from the upper position to the lower position corresponds to a translation of said movable element (50) from an upper face of the housing (20) to its lower face, the upper face being parallel and opposite to the lower face.

4. Device according to claim 3, wherein the main recess (26) of the housing (20) comprises, on at least one of a front inner face and a rear inner face, a shim (29), the rear inner face and the front inner face being parallel to each other, the shim (29) being adapted to impose on the lateral wings (51, 52) the first separation when the movable element (50) is in the upper position and the second separation when the movable element (50) is in the lower position.

5. Device according to claim 4, wherein the lateral wings (51, 52) are perpendicular to the front inner face and to the rear inner face, each lateral wing comprising two lateral edges parallel to each other that extend from the base of the movable element (50), at least one of the two lateral edges comprises a stop (56, 57) cooperating with the shim (29) to impose either of the first and second separations on the lateral wings (51, 52) when the movable element (50) is in its high position and its low position, respectively.

6. Device according to one of claims 3 to 5, wherein said device comprises a lever (60) disposed in the housing (20) and capable of adopting either of a deployed position and a folded position by pivoting about the pivot axis, the deployed position being a position for which the lever (60) imposes on the movable element (50) its upper position, and the folded position being a position for which the lever (60) imposes on the movable element (50) its lower position.

7. Device according to claim 6, wherein the lever (60) comprises two lever arms (61, 62), parallel and integral with each other, each lever arm (61, 62) comprising a shaft (63, 64) that passes through a slide (65) formed in a wall of the housing (20), perpendicular to the pivot axis A, the shaft and the slide being arranged such that the shaft is guided within the slide during pivoting of the lever (60) about the pivot axis, and the shaft cooperates with a groove (58) formed in the movable base (53) in order to impose either of the high position and the low position on the movable element (50) when the lever (60) is rotated.

8. Device according to one of claims 6 or 7, wherein the housing (20) comprises a locking clip (70) configured to lock the lever (60) when it is in the folded position.

9. Device according to one of claims 1 to 8, wherein the main body (21) comprises two walls, referred to as side walls (22, 23), disposed on either side of the side wings (51, 52), and in each of which a flexible tab terminated by a free end flush with the lower face is cut, each flexible tab comprises a stop, referred to as a locking stop, projecting internally into the main housing (26), each flexible tab cooperating with the lateral wing which is directly adjacent to it so as to be able to impose on the device either of a first state and second state, the first state being a state in which each lateral wing abuts against a stop plane of the blocking stop (81b, 82b) of the flexible tab (81, 82) with which it cooperates to prevent the movable element (50) from adopting its low position, while the second state is a state in which the flexible tabs (81, 82) are deflected, such that each of the blocking stops (81b, 82b) is in a so-called retracted position, thereby allowing the movable element (50) to adopt its low position.

10. Device according to claim 9, wherein each lateral wing comprises a counter-stop (51b, 52b) cooperating with the locking stop (81b, 82b).

11. Device according to claim 10, wherein the blocking stop (81b, 82b) of each flexible tab comprises, in the direction of its free end and in order, the stop plane and a separation plane (83b, 84b), the separation plane being arranged such that sliding an engagement tongue (121, 122) against said separation plane, in a direction perpendicular to the lower face and within the plane of the side wall, causes the flexible tab to bend and the locking stop to move into the withdrawn position.

12. Device according to claim 11, wherein the flexible tab comprises a laterally offset section, extending from the free end of said flexible tab and connected to a main section of said tab by an intermediate section that partially bears the separation plane, advantageously with the main section and the laterally offset section being parallel to each other.

13. Device according to claim 11, wherein the flexible tab comprises a generally flat section that extends uniformly from its origin to its free end, the locking stop (81b) of said flexible tab comprising an inclined plane (87a) positioned opposite the separation plane (83b) with respect to the stop plane (83a), the inclined plane being configured such that sliding of the counter-stop (51b) against said inclined plane, when a force is exerted on the movable element (50) in the direction of the lower face, causes an intermediate bending of the flexible tabs, enabling the counter-stop (51b) to abut against the stop plane (83a).
